# EUROPEAN PATENT SPECIFICATION

(11) **EP 3 542 975 B1**
(45) Date of publication and mention of the grant of the patent: **30.12.2020**
(21) Application number: 18163671.3
(22) Date of filing: 23.03.2018
(51) Int. Cl.: B26B 19/10, B26B 19/04, B26B 19/28

(54) **ELECTRICALLY DRIVEN DEVICE**
ELEKTRISCH ANGETRIEBENE VORRICHTUNG
DISPOSITIF ENTRAÎNÉ ÉLECTRIQUEMENT

(43) Date of publication of application: 25.09.2019
(73) Proprietor: Braun GmbH, 61476 Kronberg im Taunus (DE)
(72) Inventor: Krauss, Joachim, 61476 Kronberg (DE); Fischer, Uwe, 61476 Kronberg (DE); Roeder, Roman, 61476 Kronberg (DE); Peter, Andreas, 61476 Kronberg (DE)
(74) Representative: P&G Patent Germany

(56) References cited:
- EP-A1- 1 607 196
- EP-A1- 3 300 862
- WO-A1-01/51260
- DE-B- 1 052 266
- US-A- 4 274 199

## Description

### FIELD OF THE INVENTION

The present invention is concerned with an electrically driven device, for example an electric hair removal device, such as a dry shaver, an electric toothbrush or an electric skin treatment device.

### BACKGROUND OF THE INVENTION

EP 2 024 147 B1 discloses an electric shaver comprising a housing, an electric motor mounted in the housing and comprising a drive shaft having a first rotary axis, a drive pin connected to the drive shaft eccentrically with respect to the rotary axis, and at least one driven shaft mounted in the housing for performing a movement relative to the housing. The driven shaft is indirectly coupled to the drive shaft by means of a gear mechanism converting a rotary motion of the drive shaft into a reciprocating motion of the driven shaft which in turn is coupled to a cutter element of the shaver.

Electrically driven devices with a gear mechanism converting a rotary motion of the drive shaft into a reciprocating motion of the driven shaft are well known in the shaver prior art.

In such dry foil shavers, the principle cutting process is to move a first actuation member in the form of a blade relative to a foil with a surface containing holes, through which the hair is fed into the cutting zone. For cutting longer hairs or for trimmers, a second actuation member in the form of a blade moves relative to a comb. Both elements have cutting teeth. The cutting parts are usually positioned in the shaving head and for special shaving jobs, the number of cutting parts and the kind of cutting part itself (foil, trimmer) may vary. For example, there are shavers with one single foil but also shavers with 5 or more cutting elements in the shaver head. To obtain a close, smooth and efficient shave, a shaver should contain at least 2 cutting elements. An electrically driven device according to the preamble of claim 1 is also known for example from WO 01/51260 A1.

To move the different cutting elements, most dry shavers use mechanical coupling elements to connect the drive unit of the shaver with the cutting elements. The drive unit either provides a movement, where the cutting parts move in the same direction or where they move (at least partly) in the opposite direction. Some shavers use a spring mass system to increase the amplitude of the cutting element.

In most known dry shavers, each actuation member (cutting element) has a respective coupling element, like a driven shaft or pin. Thus, the number of mechanical coupling elements is identical with the number of cutting parts in the shaver head. This basic principle of the mechanical coupling between the drive unit and each cutting element is a limitation for a scenario, where a shaver has a fixed number of couplings but should contain more cutting elements.

### SUMMARY OF THE INVENTION

It is an object of the present disclosure to provide an electrically driven device permitting more flexibility regarding the design of the device. It is a further object to provide a device comprising at least two actuation members with a high dynamical stiffness.

This object is solved by an electrically driven device as defined in claim 1. In accordance with one aspect there is provided an electrically driven device comprising a housing, an application head movably mounted on the housing, an electric motor mounted in the housing and comprising a drive shaft having a first rotary axis, a driven shaft for performing a movement relative to the housing with the driven shaft extending at least partially within the application head wherein the driven shaft is indirectly coupled to the drive shaft by means of a gear mechanism converting a rotary motion of the drive shaft into a reciprocating motion of the driven shaft in a first direction, and a first actuation member and a second actuation member wherein the actuation members are movably guided in the application head and wherein the first actuation member comprises a seat receiving a portion of the driven shaft for driving the first actuation member in the first direction.

It is possible to combine both actuation members, e.g. cutting elements, with a single driven shaft if the first actuation member is coupled to the second actuation member by means of a connecting lever for driving the second actuation member in the first direction. While it is desirable that the first actuation member entrains the second actuation member regarding the movement in the first direction, relative movements between the actuation members may be desirable in other direction. This is permitted in that the connecting lever is pivotably mounted in the first actuation member and is pivotably mounted in the second actuation member.

Providing the connecting lever between two cutting elements or the like actuation members enables to choose between variable numbers of cutting elements in a shaving head, whereas the drive system contains only a limited number of driven shafts, e.g. one single driven shaft or two driven shafts. For example, this arrangement provides a platform approach which enables consumers to use various exchangeable keyparts with different numbers of cutting elements for a drive system with a set number of driven shafts.

### BRIEF DESCRIPTION OF THE DRAWINGS

- Figure 1: shows a perspective view of a device according to a first embodiment;
- Figure 2: shows the device of Figure 1 with the head partially removed;
- Figure 3: shows a sectional view of Figure 2;
- Figure 4: shows a perspective view of component parts of the device of Figure 1;
- Figure 5a: shows a cut open view of a portion of the device of Figure 1 in an idle state; and
- Figure 5b: shows a cut open view of a portion of the device of Figure 1 with a tilted cutter.

### DETAILED DESCRIPTION OF THE INVENTION

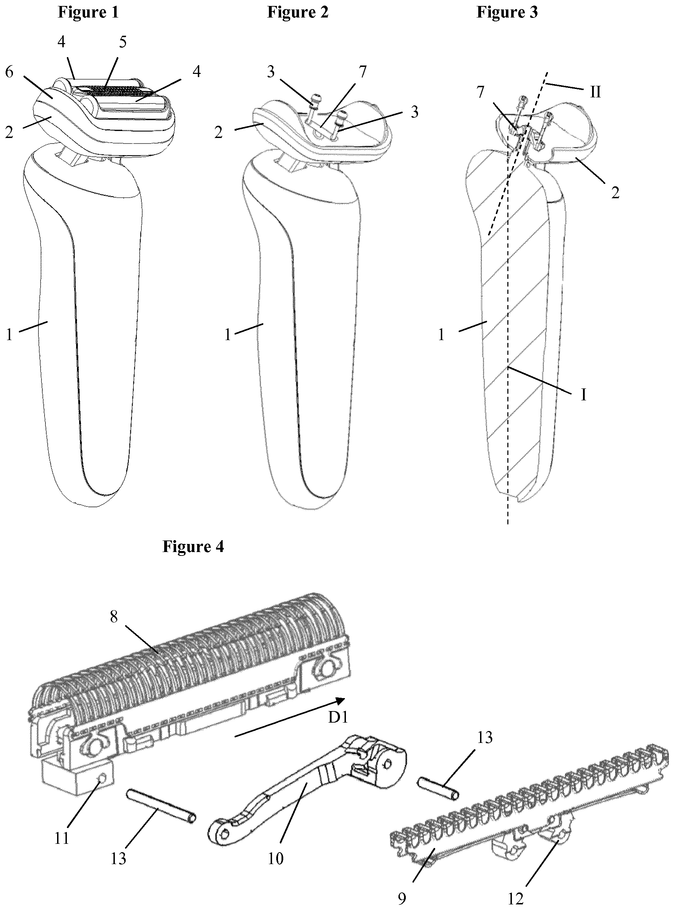

Before describing advantageous embodiments of the invention related to the embodiments depicted in Figures 1 to 5b, different aspects of the invention are described more in detail. These aspects disclose further features, advantages and possibilities of use of the present invention that might be combined in any useful combination.

The connecting lever, preferably directly, connects the first actuation member to the second actuation member such that the reciprocating movement of the first actuation member is transferred onto the second actuation member. Typically, the actuation members perform during use a reciprocating linear movement guided in the application head. To prevent that the actuation members get jammed due to bending forces, it is desirable if the connecting lever extends, at least substantially, in the first direction, i.e. in the direction of movement of the actuation members.

In addition, the bearings for the connecting lever in the actuation members should be provided such that the bending forces are reduced to a minimum. Preferably, the connecting lever is pivotably mounted in the first actuation member by means of a pin extending substantially perpendicular to the first direction and/or the connecting lever is pivotably mounted in the second actuation member by means of a pin extending substantially perpendicular to the first direction. For example, each of the pins may be received in a bush bearing of the connecting lever and a bush bearing of the respective actuation member. Such a bush bearing may be an integral component part often actuation member or may be a separate component part rigidly attached to an actuation member.

To get a perfect adaptation of the cutting elements to the skin, the actuation members, e.g. cutting elements, are positioned in such a way, that the whole member can move perpendicular to the skin (float) or it can tilt in the direction of the cutting process or perpendicular to it. In addition to this movement of the single cutting element, some shavers allow a complete rotation of the head in two directions (swivel and tilt). The adaptation of the driven cutting element to the skin is enabled via the degrees of freedom the connection lever comes with. Whereas the driving movement / force is transferred efficiently the other degrees of freedom are defined in a way that an independent float or tilt movement of both cutting elements is permitted and the floating movement of one cutting element is not substantially influencing and/or constraining the other cutting element and vice versa.

For this purpose it is preferred if the connecting lever is pivotably mounted in the first actuation member at a lateral end portion of the first actuation member and is pivotably mounted in the second actuation member at a central portion of the second actuation member. In addition, the connecting lever is preferably relatively long to avoid shifting of the second actuation member in response to the floating or a tilting movement of the first actuation member. For example, the connecting lever has a length in the first direction being at least 40%, preferably about 50%, of the length of the first actuation member.

The gear mechanism of the electrically driven device may be designed and may function as defined in EP 3 300 861 A1 and/or EP 3 300 862 A1. In more detail, the gear mechanism preferably converts a continuous rotary motion of the drive shaft into an at least substantially sinusoidal reciprocating displacement driven shaft. For example, the driven shaft may be mounted on a pivotable bridge of the gear mechanism, wherein the bridge is pivotable about a second rotary axis which is offset with respect to the driven shaft.

The present disclosure is not limited to an electrically driven device having only one driven shaft and/or only to actuation members. For example, the device may be provided with at least one further driven shaft mounted on the bridge at an opposite position with respect to the second rotary axis. The at least one further driven shaft may be coupled to at least one further actuation member such that the at least one further actuation member is driven in the direction opposite direction of the first actuation member.

The pivotable bridge may be rotationally constrained to the at least one driven shaft. The at least one driven shaft and the pivotable bridge may be separate component parts or may alternatively form one single unitary component part. As a further alternative, the at least one driven shaft may be rotatable with respect to the pivotable bridge. Due to the arrangement of the at least one driven shaft on the pivotable bridge, a reciprocating pivoting of the pivotable bridge results in a back and forth movement of the at least one driven shaft. This back and forth movement of the at least one driven shaft is a movement on the circular path which is close to a linear movement.

The first rotary axis may be inclined with respect to the second rotary axis. In more detail, the eccentric drive pin of the motor may extend parallel to the first rotary axis and the intermediate shaft and the at least one driven shaft may extend parallel to the second rotary axis. With the electrically driven device being an electric shaver this arrangement permits to provide the shaver head (application head) inclined or angled with respect to the shaver body (housing). In addition, the gear mechanism with an intermediate shaft allows a design of a shaver or the like device with a constricted neck between a body portion and a head portion.

The adaptation of the driven cutting element to the skin may be improved by the first actuation member and/or the second actuation member being mounted in the application head movable in a floating direction which is perpendicular to the first direction and parallel to the driven shaft against the bias of an elastically deformable element, e.g. a spring. Such a floating or plunging movement is typically in a direction perpendicular to a user's skin.

In addition or as an alternative, the first actuation member and/or the second actuation member may be mounted in the application head movable in a tilting direction about an axis which is perpendicular to the first direction and perpendicular to the driven shaft against the bias of an elastically deformable element, e.g. a spring. Such a tilting movement may include a floating of an actuation member on only one side. Thus, with an actuation member guided on two lateral posts with spring members, floating and tilting of the actuation member is permitted.

Still further, the electrically driven device may comprise a bearing for the application head permitting a swiveling movement of the application head relative to the housing about an axis parallel to the first direction.

According to an embodiment of the present disclosure, the he electrically driven device is a dry shaver with the first actuation member being the lower cutter of a foil type cutter unit and/or the second actuation member being the lower cutter of a non-foil type cutter unit.

Due to the fact, that the cutting elements are subjected to mechanical wear, they may be arranged in an exchangeable part of the shaver, the so called keypart, which has to be replaced after the lifetime of the parts is passed. This keypart can be repurchased. For example, the first actuation member and/or the second actuation member is mounted in a frame which is detachably fixed at the application head. Preferably, the connecting lever is detachable from the application head together with the frame and the actuation members.

The housing of the electrically driven device may comprise a cap portion with an intermediate shaft extending through the cap portion. A sealing may be provided between the cap portion and the intermediate shaft. Taking into account that the intermediate shaft typically performs a reciprocating pivoting movement by a small angle, for example about 6°, the sealing may comprise an elastically deformable sleeve fixed to the cap portion and to the intermediate shaft.

Such a sealing may contribute in closing off the housing or body portion of a shaver while a detachable shaver head may have to be cleaned in a cleaning liquid. For example, a sealing separating an inner sealed compartment of the motor and elements of the transmission (body) with an outer unsealed area where the cutting parts and/or the shaving cartridge is located.

The present disclosure proposes a solution to combine a higher number of cutting elements contained in the changing frame (spare part), i.e. the keypart, then driven shafts are provided from the shaver drive transmission. In one specific example the connecting lever between two cutting elements enables the user to choose between variable numbers of cutting elements in the shaving head, whereas the drive system contains only two driven shafts. This enables consumers to use various exchangeable keyparts with different numbers of cutting elements for a given two driven shafts system. The connecting lever is positioned in the keypart and therefore it allows a wide range of variety for the number of cutting elements in the keypart, whereas the drive system always contains the same number of mechanical couplings. The design and positioning of the connecting lever allows the use of a conventional drive system with oscillating bridges, linear motors or new drive generations e.g. rotating oscillating drives.

Turning now to the embodiment depicted in Figures 1 to 5b, the electrically driven device is a dry shaver having two driven shafts and three cutting elements. In more detail, the shaver comprises a shaver handle or housing 1 and a shaver head (application head) 2 mounted on the housing 1. The housing 1 comprises a motor with a drive shaft (not shown) and e.g. a rechargeable battery (not shown). The drive shaft defines a first rotary axis I extending for example in the main direction of the housing 1. The drive shaft is coupled via a gear mechanism (not shown) to at least one driven shaft 3 thereby converting a rotary motion of the drive shaft into a reciprocating motion of the driven shaft in a first direction D1.

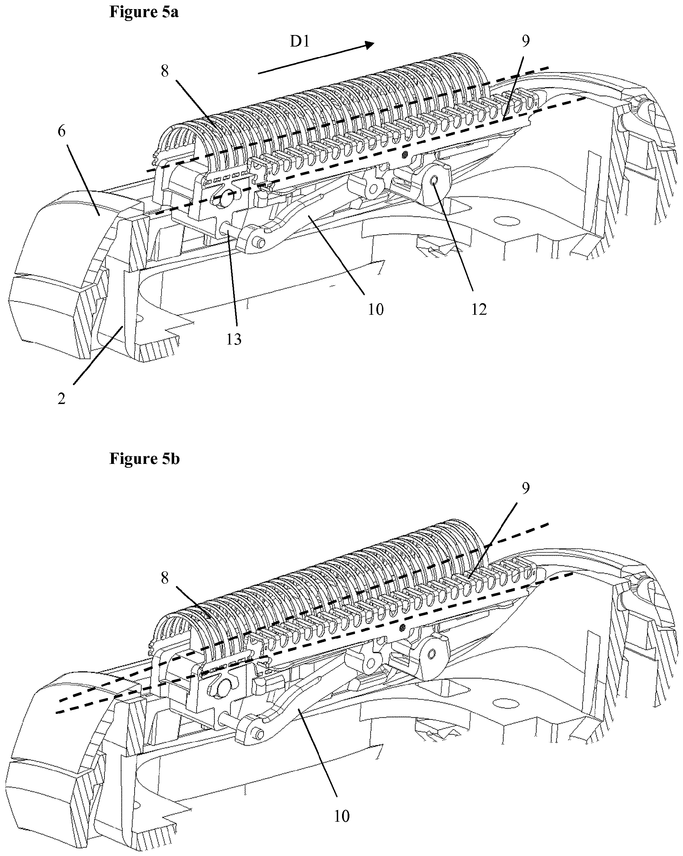

In the embodiment depicted in Figure 1, the dry shaver comprises two foil type cutter units 4 and one non-foil type cutter unit 5. As depicted in Figures 5a and 5b in more detail, the cutter units 4, 5 are provided in a frame 6 which is detachably mounted in the shaver head 2, thus permitting exchange of the cutter units. For example, the frame 6 may be releasably attached to the shaver head 2 by means of hooks engaging a spring element (not shown). Preferably, attachment of the frame 6 on the shaver head 2 simultaneously couples the driven shafts with the respective foil type cutter units 4.

In Figures 2 and 3 the frame with the cutter units is detached from the shaver head 2 such that the driven shafts 3 are visible. In the depicted embodiment the driven shafts 3 are mounted on a common pivotable bridge 7 which in turn may be mounted on an intermediate shaft defining a second rotary axis II which is inclined with respect to the first rotary axis I. This arrangement permits to provide the shaver head (application head) inclined or angled with respect to the shaver body (housing) in an optimal orientation for use.

Each of the foil type cutter units 4 comprises an actuation member in the form of a lower cutter 8 movable relative to a fixed foil type upper cutter. The lower cutter 8 is guided in the frame 6 permitting reciprocating linear displacement of the lower cutter 8. Further, the non-foil type cutter unit 5 comprises a second actuation member in the form of a lower cutter 9 movable relative to a fixed comb type upper cutter. Each lower cutter 8 of the foil type cutter units 4 comprises a seat receiving a portion of the respective driven shaft 3 for driving the actuation member in the first direction. However, the lower cutter 9 of the non-foil type cutter unit 5 is not directly connected to the driven shaft 3. Rather, the lower cutter 9 of the non-foil type cutter unit 5 is connected to one of the lower cutters 8 of a foil type cutter unit 4 by means of the connecting lever 10 as shown in Figures 4 to 5b.

For this purpose, a bush bearing 11 is provided near a lower lateral end portion of the lower cutter 8 and a further bush bearing 12 is provided near a lower central portion of the lower cutter 9. The connecting lever 10 is pivotably mounted to the lower cutter 8 by means of a pin 13 received in bush bearing 11 and is further pivotably mounted to the lower cutter 9 by means of a further pin 13 received in bush bearing 12. In the exemplary embodiment depicted in Figures 4 to 5b, the connecting lever 10 comprises a receiving section at one end into which of the bush bearing 12 is inserted.

With the connecting lever 10 pivotably attached to the lower cutter 8 and to the lower cutter 9, the connecting lever extends substantially parallel to the first direction D1 over approximately half of the length of the lower cutters 8, 9. Thus, movement of the lower cutter 8 in the first direction D1 is transmitted to the lower cutter 9.

Optionally, the lower cutters 8, 9 may be movable with respect to the frame 6 in further directions, i.e. not only in the first direction. For example, the lower cutters 8, 9 may be guided in the frame 6 permitting an individual floating movement of each lower cutter 8, 9 against the bias of a spring member (not shown) in a direction perpendicular to the first direction, e.g. parallel to the second rotary axis II. Figure 5a shows both lower cutters 8, 9 in an idle state, i.e. pushed upwards (as seen in the Figure) by the spring member. In this idle state, the lower cutters 8, 9 have an orientation substantially parallel to each other.

Figure 5b shows the first lower cutter 8 depressed against the bias of the spring member at its left end (as seen in the Figure), while the second lower cutter 9 is not depressed, i.e. still in the idle state. This results in the first lower cutter 8 being tilted with respect to the second lower cutter 9 as indicated by the dashed lines in Figure 5b. The hinged attachment of the connecting lever 10 to the first lower cutter 8 and to the second lower cutter 9 permits this tilting movement of the lower cutters with respect to each other while still transmitting movement of the lower cutter 8 in the first direction D1 to the lower cutter 9.

A comparison of Figures 5a and 5b further shows that a relative movement between the first lower cutter 8 and the second lower cutter 9, e.g. a tilting movement or a floating movement, results in a relative movement of the first lower cutter 8 and the second lower cutter 9 in the first direction D1 due to the connecting lever performing a swiveling movement about the bearing point defined by bush bearing 12 and pin 13, thereby reducing the axial distance between bush bearing 11 and bush bearing 12 in the first direction D1. In other words, individual tilting or floating results in a brief displacement of the second lower cutter 9 with respect to the first lower cutter 8. This displacement may be kept small by making the connecting lever 10 relatively long, e.g. about 50% of the length of one of the lower cutters, as depicted in the Figures.

The above connecting lever mechanism may be implemented in shaver heads with two, three, four, five, six, seven and eight cutting units or other functional drivable elements in order to dynamically connect a motor driven cutting unit or part of a cutting unit with any other cutting unit which is e.g. not otherwise linked to the motor drive. It is also possible to connect not only one cutting unit or part of a cutting unit but also several cutting units by means of additional connecting levers in order to drive all cutting units which are not otherwise linked to the motor drive.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### Reference Numerals

- 1: housing (shaver handle)
- 2: head
- 3: driven shaft
- 4: foil type cutter unit
- 5: non-foil type cutter unit
- 6: frame
- 7: bridge
- 8: first actuation member (lower cutter)
- 9: second actuation member (lower cutter)
- 10: connecting lever
- 11: bush bearing
- 12: bush bearing
- 13: pin

- I: first rotary axis
- II: second rotary axis

- D1: first direction

## Claims

1. An electrically driven device comprising
a housing (1),
an application head (2) movably mounted on the housing (1),
an electric motor mounted in the housing (1) and comprising a drive shaft having a first rotary axis (I),
a driven shaft (3) for performing a movement relative to the housing (1), the driven shaft (3) extending at least partially within the application head (2),
wherein the driven shaft (3) is indirectly coupled to the drive shaft by means of a gear mechanism converting a rotary motion of the drive shaft into a reciprocating motion of the driven shaft (3) in a first direction (D1), and
a first actuation member (8) and a second actuation member (9), wherein the actuation members (8, 9) are movably guided in the application head (2) and wherein the first actuation member (8) comprises a seat receiving a portion of the driven shaft (3) for driving the first actuation member (8) in the first direction (D1),
wherein the first actuation member (8) is coupled to the second actuation member (9) by means of a connecting lever (10) for driving the second actuation member (9) in the first direction (D1),
**characterized in that** the connecting lever (10) is pivotably mounted in the first actuation member (8) and is pivotably mounted in the second actuation member (9).

2. The electrically driven device according to claim 1, **characterized in that** the connecting lever (10) is pivotably mounted in the first actuation member (8) by means of a pin (13) extending substantially perpendicular to the first direction (D1) and/or is pivotably mounted in the second actuation member (9) by means of a pin (13) extending substantially perpendicular to the first direction (D1).

3. The electrically driven device according to claim 1 or 2, **characterized in that,** in an idle state of the device, the connecting lever (10) substantially extends in the first direction (D1).

4. The electrically driven device according to any one of the preceding claims, **characterized in that** the connecting lever (10) is pivotably mounted in the first actuation member (8) at a lateral end portion of the first actuation member (8) and is pivotably mounted in the second actuation member (9) at a central portion of the second actuation member (9).

5. The electrically driven device according to any one of the preceding claims, **characterized in that** the connecting lever (10) has a length in the first direction (D1) being at least 40%, preferably about 50%, of the length of the first actuation member (8).

6. The electrically driven device according to any one of the preceding claims, **characterized in that** the driven shaft (3) is mounted on a pivotable bridge (7) of the gear mechanism, wherein the bridge (7) is pivotable about a second rotary axis (II) which is offset with respect to the driven shaft (3).

7. The electrically driven device according to claim 6, **characterized in that** at least one further driven shaft (3) is mounted on the bridge (7) at an opposite position with respect to the second rotary axis (II) wherein the at least one further driven shaft (3) is coupled to at least one further actuation member such that the at least one further actuation member is driven in the direction opposite direction of the first actuation member (8).

8. The electrically driven device according to claim 6 or 7, **characterized in that** the first rotary axis (I) is inclined with respect to the second rotary axis (II).

9. The electrically driven device according to any one of the preceding claims, **characterized in that** the first actuation member (8) and/or the second actuation member (9) is mounted in the application head (2) movable in a floating direction which is perpendicular to the first direction (D1) and parallel to the driven shaft (3) against the bias of an elastically deformable element.

10. The electrically driven device according to any one of the preceding claims, **characterized in that** the first actuation member (8) and/or the second actuation member (9) is mounted in the application head (2) movable in a tilting direction about an axis which is perpendicular to the first direction (D1) and perpendicular to the driven shaft (3) against the bias of an elastically deformable element.

11. The electrically driven device according to any one of the preceding claims, **characterized in that** the application head (2) is movable with respect to the housing (1) in a swiveling direction about an axis parallel to the first direction (D1).

12. The electrically driven device according to any one of the preceding claims, **characterized in that** the first actuation member (8) is the lower cutter of a foil type cutter unit (4) and/or that the second actuation member (9) is the lower cutter of a non-foil type cutter unit (5).

13. The electrically driven device according to any one of the preceding claims, **characterized in that** the first actuation member (8) and/or the second actuation member (9) is mounted in a frame (6) which is detachably fixed at the application head (2).

14. The electrically driven device according to claim 13, **characterized in that** the connecting lever (10) is detachable from the application head (2) together with the frame (6) and the actuation members (8, 9).

15. The electrically driven device according to any of the preceding claims, **characterized in that** the gear mechanism converts a continuous rotary motion of the drive shaft into an at least substantially sinusoidal reciprocating displacement driven shaft (3).

## Patentansprüche

1. Elektrisch angetriebene Vorrichtung, umfassend
ein Gehäuse (1),
einen an dem Gehäuse (1) beweglich angebrachten Applikationskopf (2),
einen im Gehäuse (1) angebrachten Elektromotor, umfassend eine Antriebswelle, die eine erste Drehachse (I) aufweist,
eine Abtriebswelle (3) zum Ausführen einer Bewegung im Verhältnis zum Gehäuse (1), wobei sich die Abtriebswelle (3) mindestens teilweise innerhalb des Applikationskopfes (2) erstreckt,
wobei die Abtriebswelle (3) mit der Antriebswelle mittels eines Getriebemechanismus indirekt gekoppelt ist, der eine rotierende Bewegung der Antriebswelle in eine Hin-. und Herbewegung der Abtriebswelle (3) in einer ersten Richtung (D1) umwandelt, und
ein erstes Betätigungselement (8) und ein zweites Betätigungselement (9), wobei die Betätigungselemente (8, 9) im Applikationskopf (2) beweglich geführt sind und wobei das erste Betätigungselement (8) einen Sitz umfasst, der einen Abschnitt der Abtriebswelle (3) zum Antreiben des ersten Betätigungselements (8) in der ersten Richtung (D1) aufnimmt, wobei das erste Betätigungselement (8) mit dem zweiten Betätigungselement (9) mittels eines Verbindungshebels (10) zum Antreiben des zweiten Betätigungselements (9) in der ersten Richtung (D1) gekoppelt ist, **dadurch gekennzeichnet, dass** der Verbindungshebel (10) schwenkbar im ersten Betätigungselement (8) angebracht ist und schwenkbar im zweiten Betätigungselement (9) angebracht ist.

2. Elektrisch angetriebene Vorrichtung nach Anspruch 1, **dadurch gekennzeichnet, dass** der Verbindungshebel (10) mittels eines sich im Wesentlichen senkrecht zur ersten Richtung (D1) erstreckenden Stifts (13) schwenkbar im ersten Betätigungselement (8) angebracht ist und/oder mittels eines sich im Wesentlichen senkrecht zur ersten Richtung (D1) erstreckenden Stifts (13) schwenkbar im zweiten Betätigungselement (9) angebracht ist.

3. Elektrisch angetriebene Vorrichtung nach Anspruch 1 oder 2, **dadurch gekennzeichnet, dass** sich der Verbindungshebel (10) in einem Ruhezustand der Vorrichtung im Wesentlichen in die erste Richtung (D1) erstreckt.

4. Elektrisch angetriebene Vorrichtung nach einem der vorstehenden Ansprüche, **dadurch gekennzeichnet, dass** der Verbindungshebel (10) im ersten Betätigungselement (8) an einem seitlichen Endabschnitt des ersten Betätigungselements (8) schwenkbar angebracht ist und im zweiten Betätigungselement (9) an einem Mittelabschnitt des zweiten Betätigungselements (9) schwenkbar angebracht ist.

5. Elektrisch angetriebene Vorrichtung nach einem der vorstehenden Ansprüche, **dadurch gekennzeichnet, dass** der Verbindungshebel (10) eine Länge in der ersten Richtung (D1) aufweist, die mindestens 40 %, vorzugsweise ca. 50 % der Länge des ersten Betätigungselements (8) beträgt.

6. Elektrisch angetriebene Vorrichtung nach einem der vorherstehenden Ansprüche, **dadurch gekennzeichnet, dass** die Abtriebswelle (3) an einer schwenkbaren Brücke (7) des Getriebes angebracht ist, wobei die Brücke (7) um eine zweite Drehachse (II) schwenkbar ist, die in Bezug auf die Abtriebswelle (3) versetzt ist.

7. Elektrisch angetriebene Vorrichtung nach Anspruch 6, **dadurch gekennzeichnet, dass** mindestens eine weitere Abtriebswelle (3) an der Brücke (7) an einer gegenüberliegenden Position in Bezug auf die zweite Drehachse (II) angebracht ist, wobei die mindestens eine weitere Abtriebswelle (3) mit mindestens einem weiteren Betätigungselement derart gekoppelt ist, dass das mindestens eine weitere Betätigungselement in der entgegengesetzten Richtung des ersten Betätigungselements (8) angetrieben wird.

8. Elektrisch angetriebene Vorrichtung nach Anspruch 6 oder 7, **dadurch gekennzeichnet, dass** die erste Drehachse (I) in Bezug auf die zweite Drehachse (II) geneigt ist.

9. Elektrisch angetriebene Vorrichtung nach einem der vorstehenden Ansprüche, **dadurch gekennzeichnet, dass** das erste Betätigungselement (8) und/oder das zweite Betätigungselement (9) im Applikationskopf (2) in einer Schweberichtung, die senkrecht zur ersten Richtung (D1) und parallel zur Abtriebswelle (3) ist, gegen die Vorspannung eines elastisch verformbaren Elements beweglich angebracht ist.

10. Elektrisch angetriebene Vorrichtung nach einem der vorstehenden Ansprüche, **dadurch gekennzeichnet, dass** das erste Betätigungselement (8) und/oder das zweite Betätigungselement (9) im Applikationskopf (2) in einer Kipprichtung um eine Achse, die senkrecht zu der ersten Richtung (D1) und senkrecht zur Abtriebswelle (3) ist, gegen die Vorspannung eines elastisch verformbaren Elements beweglich angebracht ist.

11. Elektrisch angetriebene Vorrichtung nach einem der vorstehenden Ansprüche, **dadurch gekennzeichnet, dass** der Applikationskopf (2) in Bezug auf das Gehäuse (1) in einer Schwenkrichtung um eine Achse parallel zur ersten Richtung (D1) beweglich ist.

12. Elektrisch angetriebene Vorrichtung nach einem der vorstehenden Ansprüche, **dadurch gekennzeichnet, dass** das erste Betätigungselement (8) das Untermesser einer folienartigen Schneideinheit (4) ist und/oder dass das zweite Betätigungselement (9) das Untermesser einer folienlosen Schneideinheit (5) ist.

13. Elektrisch angetriebene Vorrichtung nach einem der vorstehenden Ansprüche, **dadurch gekennzeichnet, dass** das erste Betätigungselement (8) und/oder das zweite Betätigungselement (9) in einem Rahmen (6) angebracht sind, der am Applikationskopf (2) abnehmbar befestigt ist.

14. Elektrisch angetriebene Vorrichtung nach Anspruch 13, **dadurch gekennzeichnet, dass** der Verbindungshebel (10) zusammen mit dem Rahmen (6) und den Betätigungselementen (8, 9) vom Applikationskopf (2) lösbar ist.

15. Elektrisch angetriebene Vorrichtung nach einem der vorstehenden Ansprüche, **dadurch gekennzeichnet, dass** der Getriebemechanismus eine kontinuierliche Drehbewegung der Antriebswelle in eine mindestens im Wesentlichen sinusförmige Hin- und Herverschiebung der Abtriebswelle (3) umwandelt.

## Revendications

1. Dispositif à entraînement électrique comprenant
un logement (1),
une tête d'application (2) montée de manière mobile sur le logement (1),
un moteur électrique monté dans le logement (1) et comprenant un arbre d'entraînement doté d'un premier axe rotatif (I),
un arbre entraîné (3) pour effectuer un mouvement par rapport au logement (1), l'arbre entraîné (3) s'étendant au moins partiellement à l'intérieur de la tête d'application (2),
dans lequel l'arbre entraîné (3) est indirectement couplé à l'arbre d'entraînement au moyen d'un mécanisme d'engrenage convertissant un mouvement rotatif de l'arbre d'entraînement en un mouvement de va-et-vient de l'arbre entraîné (3) dans une première direction (D1), et
un premier organe d'actionnement (8) et un second organe d'actionnement (9), dans lequel les organes d'actionnement (8, 9) sont guidés de manière mobile dans la tête d'application (2) et dans lequel le premier organe d'actionnement (8) comprend un siège recevant une partie de l'arbre entraîné (3) pour entraîner le premier organe d'actionnement (8) dans la première direction (D1), dans lequel le premier organe d'actionnement (8) est couplé au second organe d'actionnement (9) au moyen d'un levier de connexion (10) pour entraîner le second organe d'actionnement (9) dans la première direction (D1), **caractérisé en ce que** le levier de connexion (10) est monté à pivotement dans le premier organe d'actionnement (8) et est monté à pivotement dans le second organe d'actionnement (9).

2. Dispositif à entraînement électrique selon la revendication 1, **caractérisé en ce que** le levier de connexion (10) est monté à pivotement dans le premier organe d'actionnement (8) au moyen d'une goupille (13) s'étendant sensiblement perpendiculairement à la première direction (D1) et/ou est monté à pivotement dans le second organe d'actionnement (9) au moyen d'une goupille (13) s'étendant sensiblement perpendiculairement à la première direction (D1).

3. Dispositif à entraînement électrique selon la revendication 1 ou 2, **caractérisé en ce que,** dans un état de repos du dispositif, le levier de connexion (10) s'étend sensiblement dans la première direction (D1).

4. Dispositif à entraînement électrique selon l'une quelconque des revendications précédentes, **caractérisé en ce que** le levier de connexion (10) est monté à pivotement dans le premier organe d'actionnement (8) au niveau d'une partie d'extrémité latérale du premier organe d'actionnement (8) et est monté à pivotement dans le second organe d'actionnement (9) au niveau d'une partie centrale du second organe d'actionnement (9).

5. Dispositif à entraînement électrique selon l'une quelconque des revendications précédentes, **caractérisé en ce que** le levier de connexion (10) présente une longueur dans la première direction (D1) représentant au moins 40 %, de préférence environ 50 %, de la longueur du premier organe d'actionnement (8).

6. Dispositif à entraînement électrique selon l'une quelconque des revendications précédentes, **caractérisé en ce que** l'arbre entraîné (3) est monté sur un pont pivotant (7) du mécanisme d'engrenage, dans lequel le pont (7) peut pivoter autour d'un second axe de rotation (II) décalé par rapport à l'arbre entraîné (3).

7. Dispositif à entraînement électrique selon la revendication 6, **caractérisé en ce qu'au** moins un autre arbre entraîné (3) est monté sur le pont (7) dans une position opposée par rapport au second axe de rotation (II) dans lequel l'au moins un autre arbre entraîné (3) est couplé à au moins un autre organe d'actionnement de sorte que l'au moins un autre organe d'actionnement soit entraîné dans la direction opposée direction au premier organe d'actionnement (8).

8. Dispositif à entraînement électrique selon la revendication 6 ou 7, **caractérisé en ce que** le premier axe de rotation (I) est incliné par rapport au second axe de rotation (II).

9. Dispositif à entraînement électrique selon l'une quelconque des revendications précédentes, **caractérisé en ce que** le premier organe d'actionnement (8) et/ou le second organe d'actionnement (9) est monté dans la tête d'application (2) de manière mobile dans une direction flottante perpendiculaire à la première direction (D1) et parallèle à l'arbre entraîné (3) contre la sollicitation d'un élément élastiquement déformable.

10. Dispositif à entraînement électrique selon l'une quelconque des revendications précédentes, **caractérisé en ce que** le premier organe d'actionnement (8) et/ou le second organe d'actionnement (9) est monté dans la tête d'application (2) de manière mobile dans une direction de basculement autour d'un axe perpendiculaire à la première direction (D1) et perpendiculaire à l'arbre entraîné (3) contre la sollicitation d'un élément élastiquement déformable.

11. Dispositif à entraînement électrique selon l'une quelconque des revendications précédentes, **caractérisé en ce que** la tête d'application (2) est mobile par rapport au logement (1) suivant une direction de pivotement autour d'un axe parallèle à la première direction (D1).

12. Dispositif à entraînement électrique selon l'une quelconque des revendications précédentes, **caractérisé en ce que** le premier organe d'actionnement (8) est le couteau inférieur d'une unité de coupe (4) du type à feuille et/ou **en ce que** le second organe d'actionnement (9) est le couteau inférieur d'une unité de coupe (5) de type sans feuille.

13. Dispositif à entraînement électrique selon l'une quelconque des revendications précédentes, **caractérisé en ce que** le premier organe d'actionnement (8) et/ou le second organe d'actionnement (9) est monté dans un cadre (6) fixé de manière amovible au niveau de la tête d'application (2).

14. Dispositif à entraînement électrique selon la revendication 13, **caractérisé en ce que** le levier de connexion (10) est détachable de la tête d'application (2) avec le cadre (6) et les organes d'actionnement (8, 9).

15. Dispositif à entraînement électrique selon l'une quelconque des revendications précédentes, **caractérisé en ce que** le mécanisme d'engrenage convertit un mouvement rotatif continu de l'arbre d'entraînement en un arbre entraîné à déplacement en va-et-vient au moins essentiellement sinusoïdal (3).
